# EUROPÄISCHE PATENTSCHRIFT

(11) **EP 4 155 845 B1**
(45) Veröffentlichungstag und Bekanntmachung des Hinweises auf die Patenterteilung: **01.11.2023**
(21) Anmeldenummer: 21198850.6
(22) Anmeldetag: 24.09.2021
(51) Int. Cl.: G05B 19/042

(54) **VERFAHREN ZUR KONFIGURATION EINES GERÄTS EINER INDUSTRIELLEN MASCHINE**
METHOD FOR CONFIGURING A DEVICE OF AN INDUSTRIAL MACHINE
PROCÉDÉ DE CONFIGURATION D'UN APPAREIL D'UNE MACHINE INDUSTRIELLE

(43) Veröffentlichungstag der Anmeldung: 29.03.2023
(73) Patentinhaber: SICK AG, 79183 Waldkirch (DE)
(72) Erfinder: Fecher, Harald, 79111 Freiburg (DE); Kerscher, Thilo, 79183 Waldkirch (DE); Ketterer, Stefan, 79294 Sölden (DE)
(74) Vertreter: Manitz Finsterwald Patent- und Rechtsanwaltspartnerschaft mbB

(56) Entgegenhaltungen:
- EP-A1- 3 012 695
- US-A1- 2013 219 158
- US-A1- 2017 242 418

## Beschreibung

Die vorliegende Erfindung betrifft ein Verfahren zur Konfiguration eines oder mehrerer Geräte einer industriellen Maschine, wobei die Maschine mehrere separate Geräte, beispielsweise Feldgeräte und/oder speicherprogrammierbare Steuerungen (SPS), umfasst.

Aus der US 2013/0219158 A1 ist ein Verfahren gemäß dem Oberbegriff des Anspruchs 1 bekannt. Die US 2017/0242418 A1 offenbart das Übertragen von Parametern an ein ausgetauschtes Netzwerkinterface. Weiterhin lehrt die EP 3 012 695 A1 die Aufteilung von Geräten in Sub-Netzwerke mit unterschiedlichen Bereichen von IP Adressen.

In heutigen industriellen Prozessen werden häufig industrielle Maschinen eingesetzt, die mehrere separate Geräte umfassen. Solche Geräte können Steuerungen, Aktoren und Sensoren sein. Die Geräte wirken zusammen, um die Funktion der industriellen Maschine zu erfüllen. Durch die industrielle Maschine kann beispielsweise die Bearbeitung von Werkstücken, das Sortieren von Paketen und dergleichen erfolgen.

Durch die starke Interaktion der verschiedenen Steuerungen, Sensoren und Aktoren der Maschine und auch durch die zunehmende Vernetzung der Geräte wirken sich die Gerätekonfigurationen einzelner Geräte immer stärker aufeinander aus.

Die Konfiguration der Geräte führt folglich zu einer gegenseitigen Abhängigkeit der Konfigurationen einzelner Geräte und damit zu einer höheren Komplexität bei der Konfiguration für den Benutzer. Um die Komplexität für den Benutzer einzudämmen ist es beispielsweise bekannt, beim Anlegen von Geräten in einer Projektierungssoftware den Benutzer mittels Abfragen zu unterstützen (beispielsweise im Rahmen eines sogenannten Wizards). Nachteilig an solchen Wizards ist aber, dass diese üblicherweise nur bei der Erstanlage von Geräten ausgeführt werden und sonst manuell angestoßen werden müssen. Weitere bekannte Lösungen betrachten üblicherweise nur ein einzelnes Gerät und können daher die steigende Komplexität innerhalb einer industriellen Maschine mit vielen Geräten nicht berücksichtigen.

Es ist daher die der Erfindung zugrundeliegende Aufgabe, ein Verfahren zur Konfiguration eines oder mehrerer Geräte einer industriellen Maschine anzugeben, welches einen Benutzer dabei unterstützt, die Komplexität in der Interaktion der Geräte der industriellen Maschine zu beherrschen.

Diese Aufgabe wird durch ein Verfahren gemäß Anspruch 1 gelöst.

Gemäß der Erfindung wird ein Verfahren zur Konfiguration eines oder mehrerer Geräte einer industriellen Maschine angegeben, wobei die Maschine mehrere separate Geräte, beispielsweise Feldgeräte und/oder speicherprogrammierbare Steuerungen (SPS), umfasst, wobei die Geräte Konfigurationseinheiten zugeordnet sind und die Konfigurationseinheiten zumindest zum Teil Bestands-Parameter umfassen und wobei mittels eines elektronischen Konfigurationssystems - zumindest eine Konfigurationseinheit konfiguriert wird, wobei beim Konfigurieren Neu-Parameter gesetzt werden, welche geräteübergreifende Auswirkungen aufweisen, sodass die Neu-Parameter bei der Interaktion mit anderen Geräten der Maschine Auswirkungen aufweisen, - beim Konfigurieren, insbesondere automatisch, Bestands-Parameter zumindest einer anderen Konfigurationseinheit berücksichtigt werden, um die Neu-Parameter zu überprüfen und/oder vorzuschlagen.

Anders ausgedrückt ist es erfindungsgemäß vorgesehen, dass beim Konfigurieren einer Konfigurationseinheit, d.h. beim Setzen von Neu-Parametern, Bestands-Parameter von einer oder mehreren anderen Konfigurationseinheiten automatisch (im Hintergrund) berücksichtigt werden. Das Überprüfen und Vorschlagen von Neu-Parametern kann von einem Assistenten oder Hintergrundassistenten durchgeführt werden. Die Bestands-Parameter können von dem elektronischen Konfigurationssystem geladen, abgefragt und/oder dem elektronischen Konfigurationssystem auf andere Weise bekannt sein. Die Bestands-Parameter fließen dann beim Setzen der Neu-Parameter mit ein, um insbesondere ein Zusammenwirken der Konfigurationseinheiten bzw. Geräte der industriellen Maschine zu ermöglichen und/oder zu optimieren.

Das elektronische Konfigurationssystem kann somit, insbesondere automatisch, passende Initialwerte für die Neu-Parameter vorschlagen. Üblicherweise wird der Benutzer diese Initialwerte auch übernehmen und somit erst das (im Hintergrund stattfindende) Überprüfen der Neu-Parameter bemerken, wenn Widersprüche entstehen, wie nachstehend noch genauer ausgeführt. Das Übernehmen (z.B. per Klick auf einen Button) der vorgeschlagenen Neu-Parameter kann insbesondere auch zu einem späteren Zeitpunkt jederzeit erfolgen.

Falls vom Benutzer ungünstige oder unpassende Neu-Parameter gesetzt werden, können diese unpassenden oder ungünstigen Neu-Parameter bei der Überprüfung erkannt werden. Es kann dann z.B. eine Warnung ausgegeben werden. Grundsätzlich kann das elektronische Konfigurationssystem dem Benutzer auch passende Neu-Parameter vorschlagen, die der Benutzer dann bestätigen kann. Hierdurch muss der Benutzer dann nicht mehr notwendigerweise einen Überblick über das komplexe Zusammenspiel innerhalb der industriellen Maschine behalten, da die von dem Konfigurationssystem vorgeschlagenen Neu-Parameter die Komplexität bereits berücksichtigen. Zudem ist von Vorteil, dass die vom Benutzer zu überblickende Parameteranzahl nicht durch das elektronische Konfigurationssystem (bzw. den Hintergrundassistenten) erhöht wird. Der Konfigurationsprozess wird auf diese Weise beschleunigt. Zudem wird die Gefahr von Fehlkonfigurationen minimiert, sodass auch die Sicherheit beim Betrieb der industriellen Maschine erhöht wird.

Nach dem Setzen der Neu-Parameter können die Neu-Parameter an die Maschine übertragen werden, insbesondere automatisch, wobei die Neu-Parameter dann im Betrieb der Maschine verwendet werden. Die Neu-Parameter können beispielsweise in ein oder mehrere Geräte der Maschine übertragen und in den Geräten verwendet werden.

Wie später noch genauer ausgeführt wird, kann eine Konfigurationseinheit beispielsweise ein oder mehrere Geräte und/oder eine Teilkonfiguration eines Geräts umfassen, welche insbesondere eine ähnliche oder gemeinsame Aufgabe innerhalb der Maschine bearbeiten.

Erfindungsgemäß betreffen die Neu-Parameter solche Parameter, welche geräteübergreifende Auswirkungen besitzen. Dies bedeutet, dass die Neu-Parameter erfindungsgemäß bei der Interaktion mit anderen Geräten Auswirkungen aufweisen und nicht nur z.B. eine Drehzahl oder die Auswahl eines Messwerts eines Geräts selbst betreffen. Die Neu-Parameter können auf solche Parameter beschränkt sein, die durch einen Benutzer veränderbar sind oder als veränderbar gekennzeichnet sind.

In diesem Zusammenhang ergibt sich der Vorteil, dass ein Benutzer trotz der geräteübergreifenden Auswirkungen nicht gezwungen ist, komplette Projekte (d.h. beispielsweise komplette Maschinen) zu konfigurieren. Stattdessen kann der Benutzer weiterhin auf Geräteebene arbeiten. Trotzdem ist es für den Benutzer weiterhin möglich, Projekteinstellungen vorzunehmen, insbesondere bevor die Konfiguration von einzelnen Geräten erfolgt. Die Projekteinstellungen können ebenfalls von dem Konfigurationssystem bzw. dem Hintergrundassistenten auf Konsistenz überprüft werden. Zudem ist es weiterhin möglich, beispielsweise innerhalb einer graphischen Benutzeroberfläche, von einer Gerätesicht auf eine Projektansicht zu wechseln.

Bei den Bestands-Parametern kann es sich insbesondere um Parameter (d.h. Einstellungswerte) einer Konfigurationseinheit/eines Geräts handeln, die bereits vorher (manuell oder ebenfalls durch das elektronische Konfigurationssystem) gesetzt wurden.

Das elektronische Konfigurationssystem kann eine Software umfassen, welche auf einem der Geräte der industriellen Maschine oder auf einer separaten Recheneinrichtung, beispielsweise einem PC, ausgeführt wird. Die separate Recheneinrichtung kann zumindest zeitweise mit der industriellen Maschine verbunden werden, beispielsweise mittels einer drahtgebundenen oder drahtlosen Datenverbindung, um die Neu-Parameter an die industrielle Maschine zu übertragen.

Die Geräte der industriellen Maschine sind bevorzugt ebenfalls über eine Datenverbindung untereinander verbunden, insbesondere mittels eines Feldbusses (z.B. Sercos III, EIP, EtherCat und dergleichen).

Das hierin beschriebene Verfahren kann bevorzugt automatisch ablaufen. Dies gilt selbstverständlich nicht für Benutzereingaben.

Vorteilhafte Weiterbildungen der Erfindung sind der Beschreibung, den Zeichnungen sowie den Unteransprüchen zu entnehmen.

Gemäß einer ersten Ausführungsform schlägt das elektronische Konfigurationssystem automatisch passende Initialwerte für die Neu-Parameter vor. Die vorgeschlagenen Initialwerte können insbesondere neu angelegte Geräte und/oder Konfigurationseinheiten betreffen. Das Berücksichtigen der Bestands-Parameter kann dabei bereits durchgeführt werden, bevor der Vorschlag der Initialwerte erfolgt.

Erfindungsgemäß sind die Neu-Parameter von einem Benutzer veränderbar. Das elektronische Konfigurationssystem zeigt erfindungsgemäß eine graphische Benutzeroberfläche (GUI) an, in welcher der Benutzer vorgeschlagene oder vom Benutzer selbst eingegebene und überprüfte Neu-Parameter verändern kann. Der Benutzer kann sich also über die Vorschläge des Konfigurationssystems hinwegsetzen.

Gemäß einer weiteren Ausführungsform erfolgt die Überprüfung und/oder der Vorschlag der Neu-Parameter dahingehend, um die Neu-Parameter für das optimierte Zusammenwirken der Konfigurationseinheiten zu bestimmen. Das optimierte Zusammenwirken kann beispielsweise eine optimierte Datenübertragung und/oder eine optimierte Zeitsynchronisation zwischen den Konfigurationseinheiten bzw. Geräten beinhalten. Beispielsweise können die Neu-Parameter derart gesetzt oder vorgeschlagen werden, dass die Neu-Parameter den Bestands-Parametern der Mehrheit der Geräte oder Konfigurationseinheiten folgen oder entsprechen. Die Neu-Parameter können dementsprechend mit der Mehrheit der Geräte oder Konfigurationseinheiten harmonieren. Anders ausgedrückt können die vorgeschlagenen Neu-Parameter so gewählt sein, dass die Anzahl der Konfigurationseinheiten, die nicht zu den vorgeschlagenen Neu-Parametern passen, minimiert werden. Auf diese Weise kann auch die Anzahl von Warnungen, die dem Benutzer bei nicht passenden Konfigurationseinheiten angezeigt werden, minimiert werden.

Bei der Überprüfung der Neu-Parameter kann z.B. überprüft werden, ob Randbedingungen eingehalten werden. Solche Randbedingungen können beispielsweise vorgegebene Adressbereiche für das Datennetzwerk oder Grenzwerte bei der Zeitsynchronisation sein (z.B. kann als Grenzwert vorgegeben sein, dass bei der Zeitsynchronisation das Aktualisierungsintervall nicht größer als 10 Mal die maximal erlaubte Abweichung sein darf).

Der Benutzer kann die vom elektronischen Konfigurationssystem vorgeschlagenen Neu-Parameter verändern und kann dann von dem elektronischen Konfigurationssystem die Einstellungen der übrigen Geräte oder Konfigurationseinheiten anpassen lassen, so dass kein Widerspruch zu seinen Änderungen vorhanden ist. Es kann also eine Art Geräte-Stapelverarbeitung aus der Konfiguration eines einzelnen Geräts bzw. einer einzelnen Konfigurationseinheit heraus erfolgen.

Gemäß einer weiteren Ausführungsform umfasst eine Konfigurationseinheit eine Teilkonfiguration eines oder mehrerer Geräte, ein einzelnes Gerät, mehrere Geräte und/oder eine oder mehrere andere Konfigurationseinheiten. Dies bedeutet, in einer Konfigurationseinheit kann z.B. nur eine Teilkonfiguration eines einzelnen Geräts enthalten sein. Beispielsweise kann die Teilkonfiguration lediglich die Netzwerkeinstellungen oder die Einstellungen zur Zeitsynchronisation des einzelnen Geräts betreffen. Ebenfalls ist es möglich, dass die Konfigurationseinheit, insbesondere dieselbe, Teilkonfiguration von mehreren Geräten umfasst, also beispielsweise die Netzwerkeinstellungen oder die Einstellungen zur Zeitsynchronisation mehrerer Geräte. Eine Konfigurationseinheit kann aber auch eine vollständige Konfiguration eines einzelnen Geräts oder mehrerer Geräte umfassen. Ebenfalls ist es möglich, dass eine oder mehrere andere Konfigurationseinheiten zu einer (übergeordneten) Konfigurationseinheit zusammengefasst sind. Eine Verschachtelung von Konfigurationseinheiten ist somit auch möglich. Schließlich ist auch eine Kombination der vorstehenden Beispiele möglich.

Weiterhin kann eine Konfigurationseinheit auch einen Datensatz, d.h. ein virtuelles Gerät, umfassen, wobei der Datensatz bzw. das virtuelle Gerät dazu dient, die Überprüfung und/oder den Vorschlag der Neu-Parameter zu beeinflussen. Es können also unabhängige Parameter zur Beeinflussung der Überprüfung und/oder des Vorschlags in einer Konfigurationseinheit hinterlegt sein.

Gemäß einer weiteren Ausführungsform werden die Bestands-Parameter anderer Geräte und/oder Konfigurationseinheiten basierend auf den Neu-Parametern überprüft und gegebenenfalls Änderungen an den Bestands-Parametern vorgeschlagen. Nach der Eingabe der Neu-Parameter oder der Bestätigung durch den Benutzer, können die Bestands-Parameter, insbesondere aller, anderen Geräte und/oder Konfigurationseinheiten überprüft werden, ob die Bestands-Parameter zu den Neu-Parametern beispielsweise im Widerspruch stehen. Gegebenenfalls können die Bestands-Parameter der anderen Geräte und/oder Konfigurationseinheiten dann geändert werden, um den Widerspruch aufzulösen. Hierzu kann der Benutzer z.B. mittels eines Dialogs zur Änderung der Bestands-Parameter der anderen Geräte und/oder Konfigurationseinheiten aufgefordert werden. Ein Widerspruch kann insbesondere dann auftreten, wenn sich die Neu-Parameter an der Mehrheit der Geräte orientieren, so dass dann Bestands-Parameter einer Minderheit der Geräte oder Konfigurationseinheiten nicht oder nicht optimal zu den Neu-Parametern passen. Auf diese Weise kann ein Widerspruch zwischen den Neu-Parametern und den Bestands-Parametern durch das elektronische Konfigurationssystem und insbesondere unter Mithilfe des Benutzers ausgeräumt werden.

Gemäß einer weiteren Ausführungsform umfasst das elektronische Konfigurationssystem eine Assistenteneinheit, wobei die Assistenteneinheit des elektronischen Konfigurationssystems beim Konfigurieren Bestands-Parameter zumindest einer anderen Konfigurationseinheit berücksichtigt, um die Neu-Parameter zu überprüfen und/oder vorzuschlagen. Dabei werden für die Überprüfung und/oder den Vorschlag der Neu-Parameter verschiedene Gruppen von Konfigurationseinheiten von verschiedenen Assistenteneinheiten überprüft, wobei die verschiedenen Assistenteneinheiten verschiedene Mengen von Bestands-Parametern und/oder verschiedene Algorithmen zum Überprüfen und/oder Vorschlagen der Neu-Parameter verwenden. Durch die verschiedenen Assistenteneinheiten ist es möglich, für verschiedene Arten von Parametern verschiedene Assistenteneinheiten zu verwenden, die auf die jeweilige Art von Parametern angepasst sind. Beispielsweise kann eine Assistenteneinheit für die Netzwerkadressen und eine andere Assistenteneinheit für die Zeitsynchronisation verwendet werden. Die verschiedenen Assistenteneinheiten können somit unterschiedliche Datengrundlagen und/oder unterschiedliche Entscheidungslogiken (Algorithmen) verwenden. Die Konfigurationseinheiten können gruppiert sein, wobei unterschiedliche Gruppen der Konfigurationseinheiten unterschiedlichen Assistenteneinheiten zugeordnet werden.

Bevorzugt sind eine oder mehrere der Assistenteneinheiten immer aktiv oder werden zumindest dann automatisch aktiviert, sobald Neu-Parameter gesetzt werden und/oder wenn Neu-Parameter überprüft und/oder vorgeschlagen werden sollen.

Gemäß einer weiteren Ausführungsform erfolgt eine Visualisierung des Ergebnisses der Überprüfung und/oder des Vorschlags, wobei der Benutzer bevorzugt um eine Bestätigung des Vorschlags gebeten wird. Die Visualisierung kann sowohl für die Neu-Parameter der gerade konfigurierten Konfigurationseinheit erfolgen, als auch für Bestands-Parameter anderer Konfigurationseinheiten. Beispielsweise kann die Visualisierung wiederum in der GUI erfolgen, wobei z.B. ein Vorschlag (des Konfigurationssystems) für geänderte Neu-Parameter oder für eine Auflösung eines Konflikts mit Bestands-Parametern angezeigt wird. Der Benutzer kann dann beispielsweise bestätigen, ob er die geänderten Neu-Parameter annimmt und/oder ob er der Auflösung des Konflikts mit den Bestands-Parametern zustimmt.

Gemäß einer weiteren Ausführungsform sucht das Konfigurationssystem nach zusätzlichen Geräten über zumindest ein Datennetzwerk. Zum Suchen der zusätzlichen Geräte kann das elektronische Konfigurationssystem mit einem Datennetzwerk der industriellen Maschine gekoppelt werden. Bevorzugt werden Bestands-Parameter der zusätzlichen (über das Datennetzwerk aufgefundenen) Geräte bei der Überprüfung und/oder dem Vorschlag der Neu-Parameter berücksichtigt. Insbesondere werden also nicht nur dem Konfigurationssystem ursprünglich bekannte Geräte und/oder Konfigurationseinheiten berücksichtigt, sondern es können auch die zusätzlichen Geräte bei der Überprüfung und/oder dem Vorschlag der Neu-Parameter berücksichtigt werden. Die zusätzlichen Geräte können beispielsweise über eine sogenannte *Discovery* in dem Datennetzwerk aufgefunden werden. Nach dem Auffinden können die Bestands-Parameter der zusätzlichen Geräte abgefragt und an das Konfigurationssystem übertragen werden. Die zusätzlichen Geräte müssen also nicht beispielsweise in einem Projekt des Konfigurationssystems enthalten sein, sondern können später hinzugefügt werden.

Gemäß einer weiteren Ausführungsform können Konfigurationseinheiten als bei der Überprüfung und/oder dem Vorschlag der Neu-Parameter nicht zu berücksichtigen gekennzeichnet werden. Durch die Kennzeichnung einer Konfigurationseinheit bzw. eines Geräts als nicht zu berücksichtigen kann die Konfigurationseinheit/das Gerät von den anderen Konfigurationseinheiten entkoppelt werden und wird so aus der Berücksichtigung für die Überprüfung und/oder den Vorschlag entfernt. Hierdurch wird eine Flexibilität geschaffen, um auch "anders" konfigurierte Geräte zu ermöglichen. Durch die Entkopplung kann somit eine abweichende Geräteteilmenge vom Benutzer identifiziert werden, ohne auf die grundsätzliche Unterstützung durch das elektronische Konfigurationssystem verzichten zu müssen.

Gemäß einer weiteren Ausführungsform umfassen die Neu-Parameter und/oder die Bestands-Parameter Netzwerkadressen, Einstellungen zur Zeitsynchronisation, eine Safety Network Number (SNN), Einstellungen zur Datenaufzeichnung und/oder Einstellungen zur Übersetzung von Netzwerkadressen (NAT). Beispielsweise können die Bestands-Parameter einen bestimmten Bereich von Netzwerkadressen (IP Range) verwenden, wobei dann auch Neu-Parameter in demselben Bereich von Netzwerkadressen vorgeschlagen werden. Alternativ oder zusätzlich kann beispielsweise bei einer Verwendung einer lokalen Zeit für die Zeitsynchronisation auch die Neu-Parameter derart gesetzt werden, dass eine lokale Zeitsynchronisation verwendet wird. Es kann also dieselbe Art der Zeitsynchronisation für alle oder zumindest die meisten der Konfigurationseinheiten verwendet werden.

Die Neu-Parameter können auch Bedienparameter umfassen, welche das Verhalten des elektronischen Konfigurationssystems betreffen. Beispielsweise können die Bedienparameter angeben, welcher Teil einer Konfiguration auf das Gerät oder die Konfigurationseinheit übertragen wird.

Gemäß einer weiteren Ausführungsform werden vom Benutzer angenommene Vorschläge gespeichert und weitere Vorschläge automatisch angenommen, sofern sie den vom Benutzer angenommenen Vorschlägen entsprechen. Das elektronische Konfigurationssystem kann sich also Präferenzen des Benutzers hinsichtlich der Vorschläge merken und bei weiteren Vorschlägen automatisch entsprechend dem bisherigen Verhalten des Benutzers verfahren.

Gemäß einer weiteren Ausführungsform werden vom Benutzer für andere Konfigurationseinheiten eingegebene Bestands-Parameter gespeichert und als Neu-Parameter vorgeschlagen. Das elektronische Konfigurationssystem kann dementsprechend auch bei anderen Konfigurationseinheiten erfasste Präferenzen des Benutzers (d.h. die eingegebenen Bestands-Parameter) speichern und dieselben oder entsprechende Neu-Parameter bei der Konfiguration vorschlagen.

Weiterer Gegenstand der Erfindung ist ein elektronisches Konfigurationssystem gemäß Anspruch 13.

Weiterer Gegenstand der Erfindung ist ein System umfassend ein elektronisches Konfigurationssystem der vorstehend erläuterten Art. Das System umfasst zudem mehrere Geräte einer industriellen Maschine, wobei das elektronische Konfigurationssystem eingerichtet ist, zumindest ein Gerät der industriellen Maschine mit Neu-Parametern zu konfigurieren.

Für das erfindungsgemäße elektronische Konfigurationssystem und das erfindungsgemäße System gelten die Ausführungen zum erfindungsgemäßen Verfahren entsprechend. Dies gilt insbesondere hinsichtlich Vorteilen und Ausführungsformen.

Nachfolgend wird die Erfindung rein beispielhaft unter Bezugnahme auf die Zeichnungen beschrieben. Es zeigen:
- Fig. 1: eine industrielle Maschine mit mehreren separaten Geräten und einem elektronischen Konfigurationssystem in einer schematischen Ansicht;
- Fig. 2: das Ergebnis einer Überprüfung durch das Konfigurationssystem;
- Fig. 3: den Vorschlag von Änderungen durch das Konfigurationssystem;
- Fig. 4: einen Vorschlag von Änderungen an anderen Geräten durch das Konfigurationssystem; und
- Fig. 5: einen Detaildialog, welcher z.B. im Nachgang von Fig. 4 zum Tragen kommen kann.

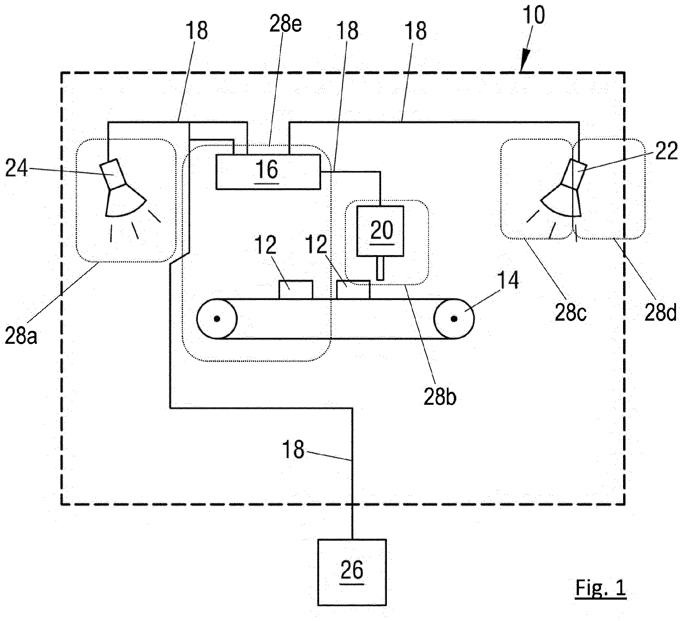

Fig. 1 zeigt eine industrielle Maschine 10. Die Maschine 10 dient der Bearbeitung von Werkstücken 12, welche auf einem Förderband 14 transportiert werden.

Die Maschine 10 umfasst mehrere Geräte. Als erstes Gerät umfasst die Maschine 10 eine speicherprogrammierbare Steuerung (SPS) 16. Die SPS 16 ist mittels eines Feldbusses 18 mit weiteren Geräten verbunden. Über den Feldbus 18 sendet die SPS 16 im Betrieb Anweisungen an die weiteren Geräte. Zudem wird über den Feldbus 18 eine Konfiguration der Geräte mit Neu-Parametern vorgenommen, wie nachfolgend noch erläutert wird.

Als weitere Geräte umfasst die Maschine 10 eine Bohrer-Einheit 20, welche Löcher in die Werkstücke 12 einbringt. Weitere Geräte der Maschine 10 sind ein erster Laserscanner 22 und ein zweiter Laserscanner 24. Die Bohrer-Einheit 20 sowie die Laserscanner 22, 24 sind ebenfalls mittels des Feldbusses 18 mit der SPS 16 gekoppelt. Die Laserscanner 22, 24 überwachen Schutzfelder in der Umgebung der Maschine 10, so dass beim Annähern zum Beispiel einer Person an die Bohrer-Einheit 20 die Maschine gestoppt werden kann.

Zur Konfiguration der Maschine 10 kann zumindest zeitweilig ein elektronisches Konfigurationssystem 26 mittels des Feldbusses 18 an die Maschine 10 angeschlossen werden.

Wird nun davon ausgegangen, dass die Konfiguration für die Bohrer-Einheit 20 initial aufgespielt oder erneuert werden soll, d.h. dass Neu-Parameter gesetzt werden sollen, so kann die Konfiguration durch einen Benutzer des elektronischen Konfigurationssystems festgelegt werden. Im hier erläuterten Beispiel wird davon ausgegangen, dass die übrigen Geräte der industriellen Maschine 10, also das Förderband 14, die Laserscanner 22, 24 und die SPS 16 bereits konfiguriert sind und somit Bestands-Parameter aufweisen.

Für die Konfiguration sind die verschiedenen Geräte der industriellen Maschine 10 jeweils Konfigurationseinheiten 28a bis 28e zugewiesen. Der Konfigurationseinheit 28a ist der zweite Laserscanner 24 zugewiesen. Der Konfigurationseinheit 28b ist die Bohrer-Einheit 20 zugewiesen. Die Konfiguration des ersten Laserscanners 22 ist auf zwei Konfigurationseinheiten 28c, 28d aufgeteilt (eine z.B. für die Netzwerckonfiguration und die andere für die Zeitsynchronisation). Die Konfigurationseinheit 28e umfasst die SPS 16 und das Förderband 14.

Werden nun, insbesondere vom Benutzer, Neu-Parameter für die Bohrer-Einheit 20 gesetzt, welche geräteübergreifend Auswirkungen besitzen, so führt das elektronische Konfigurationssystem 26 unmittelbar nach Setzen der Neu-Parameter durch den Benutzer automatisch eine Überprüfung der Neu-Parameter durch und schlägt gegebenenfalls Veränderungen an den Neu-Parametern vor. Bei der Überprüfung und/oder beim Vorschlag werden Bestands-Parameter der anderen Konfigurationseinheiten, welche nicht die Bohrer-Einheit 20 umfassen, also der Konfigurationseinheiten 28a, 28c, 28d, 28e, berücksichtigt und auf Widersprüche oder Optimierungspotential hin überprüft.

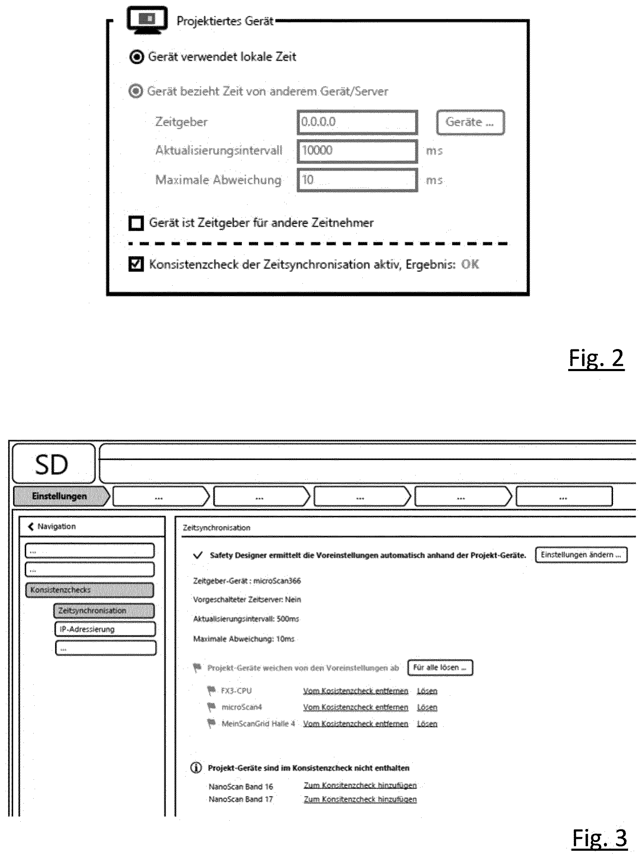

Wird beispielsweise in dem elektronischen Konfigurationssystem eine lokale Zeit für die Zeitsynchronisation der Konfigurationseinheit 28b und damit für die Bohrer-Einheit 20 gesetzt, so überprüft das Konfigurationssystem automatisch, ob diese Art der Zeitsynchronisation mit der Zeitsynchronisation der übrigen Konfigurationseinheiten 28a, 28c bis 28e kompatibel ist. Das Ergebnis der Überprüfung kann in einer graphischen Benutzeroberfläche (GUI) angezeigt werden, wie dies auch in Fig. 2 dargestellt ist. In Fig. 2 wird dem Benutzer angezeigt, dass die gewählte Verwendung der lokalen Zeit keinen Konflikt mit den Bestands-Parametern der übrigen Geräte/Konfigurationseinheiten bewirkt.

In Fig. 3 ist der Fall dargestellt, dass ein gesetzter Neu-Parameter zur Zeitsynchronisation im Widerspruch zu anderen Konfigurationseinheiten oder Geräten steht. In Fig. 3 wird angezeigt, dass eine Abweichung bei bestimmten Geräten besteht. ("Projekt-Geräte weichen von den Voreinstellungen ab"). In der in Fig. 3 gezeigten GUI des elektronischen Konfigurationssystems kann der Benutzer nun auswählen, ob die in Konflikt stehenden Geräte entkoppelt, d.h. nicht weiter berücksichtigt werden sollen ("vom Konsistenzcheck entfernen") oder ob der Widerspruch durch einen Vorschlag des Konfigurationssystems aufgelöst werden soll ("für alle lösen" / "lösen").

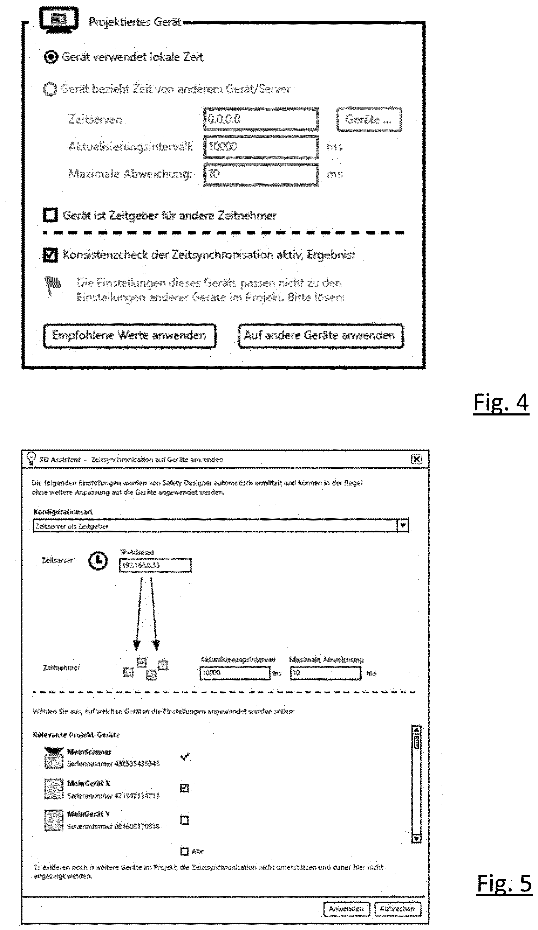

Eine andere Art der Darstellung eines Widerspruchs, welcher bei der Überprüfung der Neu-Parameter des gerade konfigurierten Geräts entdeckt wurde, ist in Fig. 4 gezeigt. Hier wird dem Benutzer angeboten, entweder die Neu-Parameter gemäß einem Vorschlag des Konfigurationssystems zu setzen ("empfohlene Werte anwenden") oder aber die Bestands-Parameter der anderen Konfigurationseinheiten zu ändern und damit an die Neu-Parameter anzupassen ("Auf andere Geräte anwenden").

Wählt der Benutzer beispielsweise "Auf andere Geräte anwenden" aus, so gelangt er in die in Fig. 5 gezeigte Eingabemaske, in welcher er im unteren Teil auswählen kann, welche Geräte den im oberen Teil von Fig. 5 gezeigten Zeitserver als Zeitgeber verwenden sollen.

Nach Abschluss oder auch schon während dem Setzen der Neu-Parameter (und gegebenenfalls der Veränderung von Bestands-Parametern) können die Neu-Parameter und gegebenenfalls geänderte Bestands-Parameter über den Feldbus 18 von dem Konfigurationssystem 26 an die Konfigurationseinheiten 28 übermittelt werden. Die Konfigurationseinheiten 28 und damit die Geräte der industriellen Maschine 10 können anschließend die geänderten Parameter im Betrieb der industriellen Maschine verwenden.

Es ist ersichtlich, dass es für einen Benutzer durch die Überprüfung und die Vorschläge des elektronischen Konfigurationssystems 26 erleichtert wird, konsistente Einstellungen für sämtliche Geräte der industriellen Maschine 10 zu finden, obwohl jeweils nur an der Konfiguration eines einzelnen Geräts gearbeitet wird. Der Konfigurationsvorgang wird dadurch vereinfacht und beschleunigt. Zudem wird die Gefahr von (unabsichtlich) widersprüchlichen Parametern reduziert.

### Bezugszeichenliste

- 10: Maschine
- 12: Werkstück
- 14: Förderband
- 16: SPS
- 18: Feldbus
- 20: Bohrer-Einheit
- 22: erster Laserscanner
- 24: zweiter Laserscanner
- 26: Konfigurationssystem
- 28: Konfigurationseinheit

## Patentansprüche

1. Verfahren zur Konfiguration eines oder mehrerer Geräte (14, 16, 20, 22, 24) einer industriellen Maschine (10), wobei die Maschine (10) mehrere separate Geräte (14, 16, 20, 22, 24), beispielsweise Feldgeräte und/oder speicherprogrammierbare Steuerungen (SPS), umfasst, wobei die Geräte (14, 16, 20, 22, 24) Konfigurationseinheiten (28a-28e) zugeordnet sind und die Konfigurationseinheiten (28a-28e) zumindest zum Teil Bestands-Parameter umfassen,
**dadurch gekennzeichnet, dass**
mittels eines elektronischen Konfigurationssystems
- zumindest eine Konfigurationseinheit (28a-28e) konfiguriert wird, wobei beim Konfigurieren Neu-Parameter gesetzt werden, welche geräteübergreifende Auswirkungen aufweisen, sodass die Neu-Parameter bei der Interaktion mit anderen Geräten der Maschine (14, 16, 20, 22, 24) Auswirkungen aufweisen,
- beim Konfigurieren Bestands-Parameter zumindest einer anderen der Konfigurationseinheiten (28a-28e) berücksichtigt werden, um die Neu-Parameter zu überprüfen und/oder vorzuschlagen,
wobei das elektronische Konfigurationssystem eine graphische Benutzeroberfläche anzeigt, in welcher ein Benutzer vorgeschlagene oder vom Benutzer selbst eingegebene und überprüfte Neu-Parameter verändern kann.

2. Verfahren nach Anspruch 1,
wobei das elektronische Konfigurationssystem automatisch passende Initialwerte für die Neu-Parameter vorschlägt.

3. Verfahren nach einem der vorstehenden Ansprüche,
wobei die Überprüfung und/oder der Vorschlag der Neu-Parameter dahingehend erfolgt, um die Neu-Parameter für das optimierte Zusammenwirken der Konfigurationseinheiten (28a-28e) zu bestimmen.

4. Verfahren nach einem der vorstehenden Ansprüche, wobei eine der Konfigurationseinheiten (28a-28e) eine Teil-Konfiguration eines oder mehrerer Geräte (14, 16, 20, 22, 24), ein einzelnes Gerät (14, 16, 20, 22, 24), mehrere Geräte (14, 16, 20, 22, 24) und/oder eine oder mehrere andere Konfigurationseinheiten (28a-28e) umfasst.

5. Verfahren nach einem der vorstehenden Ansprüche,
wobei die Bestands-Parameter anderer Geräte (14, 16, 20, 22, 24) und/oder Konfigurationseinheiten (28a-28e) basierend auf den Neu-Parametern überprüft werden und gegebenenfalls Änderungen an den Bestands-Parametern vorgeschlagen werden.

6. Verfahren nach einem der vorstehenden Ansprüche,
wobei das elektronische Konfigurationssystem zumindest eine Assistenteneinheit umfasst, und die Assistenteneinheit des elektronischen Konfigurationssystems beim Konfigurieren Bestands-Parameter zumindest einer anderen Konfigurationseinheit (28a-28e) berücksichtigt, um die Neu-Parameter zu überprüfen und/oder vorzuschlagen,
wobei für die Überprüfung und/oder den Vorschlag der Neu-Parameter verschiedene Gruppen von Konfigurationseinheiten (28a-28e) von verschiedenen Assistenteneinheiten überprüft werden, wobei die verschiedenen Assistenteneinheiten verschiedene Mengen von Bestands-Parametern und/oder verschiedene Algorithmen zum Überprüfen und/oder Vorschlagen der Neu-Parameter verwenden.

7. Verfahren nach einem der vorstehenden Ansprüche,
wobei eine Visualisierung des Ergebnisses der Überprüfung und/oder des Vorschlags erfolgt, wobei der Benutzer bevorzugt um eine Bestätigung des Vorschlags gebeten wird.

8. Verfahren nach einem der vorstehenden Ansprüche,
wobei das Konfigurationssystem nach zusätzlichen Geräten (14, 16, 20, 22, 24) über ein Datennetzwerk sucht und Bestands-Parameter der zusätzlichen Geräte (14, 16, 20, 22, 24) bei der Überprüfung und/oder dem Vorschlag der Neu-Parameter berücksichtigt werden.

9. Verfahren nach einem der vorstehenden Ansprüche,
wobei Konfigurationseinheiten (28a-28e) als bei der Überprüfung und/oder dem Vorschlag der Neu-Parameter nicht zu berücksichtigen gekennzeichnet werden können.

10. Verfahren nach einem der vorstehenden Ansprüche,
wobei die Neu-Parameter und/oder die Bestands-Parameter Netzwerkadressen, Einstellungen zur Zeitsynchronisation, eine Safety-Network-Number (SNN), Einstellungen zur Datenaufzeichnung und/oder Einstellungen zur Übersetzung von Netzwerkadressen (NAT) umfassen.

11. Verfahren nach einem der vorstehenden Ansprüche,
wobei vom Benutzer angenommene Vorschläge gespeichert werden und weitere Vorschläge automatisch angenommen werden, sofern sie den vom Benutzer angenommenen Vorschlägen entsprechen.

12. Verfahren nach einem der vorstehenden Ansprüche,
wobei vom Benutzer für andere Konfigurationseinheiten (28a-28e) eingegebene Bestands-Parameter gespeichert werden und als Neu-Parameter vorgeschlagen werden.

13. Elektronisches Konfigurationssystem zur Konfiguration eines oder mehrerer Geräte (14, 16, 20, 22, 24) einer industriellen Maschine (10), wobei die Geräte (14, 16, 20, 22, 24) Konfigurationseinheiten (28a-28e) zugeordnet sind und die Konfigurationseinheiten (28a-28e) zumindest zum Teil Bestands-Parameter umfassen,
**dadurch gekennzeichnet, dass**
das elektronische Konfigurationssystem ausgebildet ist,
- zumindest eine Konfigurationseinheit (28a-28e) zu konfigurieren, wobei beim Konfigurieren Neu-Parameter gesetzt werden, welche geräteübergreifende Auswirkungen aufweisen, sodass die Neu-Parameter bei der Interaktion mit anderen Geräten der Maschine (14, 16, 20, 22, 24) Auswirkungen aufweisen und
- beim Konfigurieren Bestands-Parameter zumindest einer anderen der Konfigurationseinheiten (28a-28e) zu berücksichtigen, um die Neu-Parameter zu überprüfen und/oder vorzuschlagen,
wobei das elektronische Konfigurationssystem ausgebildet ist, eine graphische Benutzeroberfläche anzuzeigen, in welcher ein Benutzer vorgeschlagene oder vom Benutzer selbst eingegebene und überprüfte Neu-Parameter verändern kann.

14. System umfassend ein elektronisches Konfigurationssystem gemäß Anspruch 13 und mehreren Geräten (14, 16, 20, 22, 24) einer industriellen Maschine (10), wobei das elektronische Konfigurationssystem eingerichtet ist, ein Gerät (14, 16, 20, 22, 24) der industriellen Maschine (10) mit Neu-Parametern zu konfigurieren.

## Claims

1. A method of configuring one or more devices (14, 16, 20, 22, 24) of an industrial machine (10), wherein the machine (10) comprises a plurality of separate devices (14, 16, 20, 22, 24), for example field devices and/or programmable logic controllers (PLCs), wherein the devices (14, 16, 20, 22, 24) are associated with configuration units (28a-28e) and the configuration units (28a-28e) at least partly comprise existing parameters, **characterized in that**,
by means of an electronic configuration system,
- at least one configuration unit (28a-28e) is configured, with new parameters being set during the configuration that have cross-device effects so that the new parameters have effects when interacting with other devices of the machine (14, 16, 20, 22, 24),
- existing parameters of at least one other of the configuration units (28a-28e) are considered during the configuration to check and/or suggest the new parameters,
wherein the electronic configuration system displays a graphical user interface in which a user can modify suggested new parameters or new parameters entered and checked by the user himself.

2. A method in accordance with claim 1,
wherein the electronic configuration system automatically suggests suitable initial values for the new parameters.

3. A method in accordance with one of the preceding claims,
wherein the checking and/or the suggestion of the new parameters takes place in order to determine the new parameters for the optimized cooperation of the configuration units (28a-28e).

4. A method in accordance with any one of the preceding claims,
wherein one of the configuration units (28a-28e) comprises a partial configuration of one or more devices (14, 16, 20, 22, 24), a single device (14, 16, 20, 22, 24), a plurality of devices (14, 16, 20, 22, 24) and/or one or more other configuration units (28a-28e).

5. A method in accordance with any one of the preceding claims,
wherein the existing parameters of other devices (14, 16, 20, 22, 24) and/or configuration units (28a-28e) are checked based on the new parameters and, if necessary, changes to the existing parameters are suggested.

6. A method in accordance with any one of the preceding claims,
wherein the electronic configuration system comprises at least one assistant unit and the assistant unit of the electronic configuration system considers existing parameters of at least one other configuration unit (28a-28e) during the configuration to check and/or suggest the new parameters, wherein, for the checking and/or suggestion of the new parameters, different groups of configuration units (28a-28e) are checked by different assistant units, wherein the different assistant units use different sets of existing parameters and/or different algorithms for checking and/or suggesting the new parameters.

7. A method in accordance with any one of the preceding claims,
wherein a visualization of the result of the check and/or the suggestion takes place, wherein the user is preferably requested to confirm the suggestion.

8. A method in accordance with any one of the preceding claims, wherein the configuration system searches for additional devices (14, 16, 20, 22, 24) via a data network and existing parameters of the additional devices (14, 16, 20, 22, 24) are considered when checking and/or suggesting the new parameters.

9. A method in accordance with any one of the preceding claims,
wherein configuration units (28a-28e) can be marked as not to be considered when checking and/or suggesting the new parameters.

10. A method in accordance with any one of the preceding claims,
wherein the new parameters and/or the existing parameters comprise network addresses, time synchronization settings, a safety network number (SNN), data logging settings and/or network address translation (NAT) settings.

11. A method in accordance with any one of the preceding claims,
wherein suggestions accepted by the user are saved and further suggestions are automatically accepted if they match the suggestions accepted by the user.

12. A method in accordance with any one of the preceding claims,
wherein existing parameters entered by the user for other configuration units (28a-28e) are stored and suggested as new parameters.

13. An electronic configuration system for configuring one or more devices (14, 16, 20, 22, 24) of an industrial machine (10), wherein the devices (14, 16, 20, 22, 24) are associated with configuration units (28a-28e) and the configuration units (28a-28e) at least partly comprise existing parameters, **characterized in that**
the electronic configuration system is configured
- to configure at least one configuration unit (28a-28e), with new parameters being set during the configuration that have cross-device effects so that the new parameters have effects when interacting with other devices of the machine (14, 16, 20, 22, 24); and
- to consider existing parameters of at least one other of the configuration units (28a-28e) during the configuration to check and/or suggest the new parameters,
wherein the electronic configuration system is configured to display a graphical user interface in which a user can modify suggested new parameters or new parameters entered and checked by the user himself.

14. A system comprising an electronic configuration system in accordance with claim 13 and a plurality of devices (14, 16, 20, 22, 24) of an industrial machine (10), wherein the electronic configuration system is adapted to configure a device (14, 16, 20, 22, 24) of the industrial machine (10) with new parameters.

## Revendications

1. Procédé de configuration d'un ou plusieurs appareils (14, 16, 20, 22, 24) d'une machine industrielle (10), la machine (10) comprenant plusieurs appareils séparés (14, 16, 20, 22, 24), par exemple des appareils de terrain et/ou des automates programmables industriels (API), les appareils (14, 16, 20, 22, 24) étant associés à des unités de configuration (28a-28e) et les unités de configuration (28a-28e) comprenant au moins en partie des paramètres existants,
**caractérisé en ce que**
un système de configuration électronique est conçu pour
- configurer au moins une unité de configuration (28a-28e), de nouveaux paramètres étant définis lors de la configuration, lesquels présentent des effets sur l'ensemble des appareils, de sorte que les nouveaux paramètres ont des effets lors de l'interaction avec d'autres appareils (14, 16, 20, 22, 24) de la machine,
- prendre en compte, lors de la configuration, des paramètres existants d'au moins une autre parmi les unités de configuration (28a-28e), afin de vérifier et/ou de proposer les nouveaux paramètres,
le système de configuration électronique affichant une surface utilisateur graphique dans laquelle un utilisateur peut modifier les nouveaux paramètres proposés ou entrés et vérifiés par l'utilisateur lui-même.

2. Procédé selon la revendication 1,
dans lequel le système de configuration électronique propose automatiquement des valeurs initiales appropriées pour les nouveaux paramètres.

3. Procédé selon l'une des revendications précédentes,
dans lequel la vérification et/ou la proposition des nouveaux paramètres s'effectue dans le but de déterminer les nouveaux paramètres pour l'interaction optimisée des unités de configuration (28a-28e).

4. Procédé selon l'une des revendications précédentes,
dans lequel l'une des unités de configuration (28a-28e) comprend une configuration partielle d'un ou plusieurs appareils (14, 16, 20, 22, 24), un seul appareil (14, 16, 20, 22, 24), plusieurs appareils (14, 16, 20, 22, 24) et/ou une ou plusieurs autres unités de configuration (28a-28e).

5. Procédé selon l'une des revendications précédentes,
dans lequel les paramètres existants d'autres appareils (14, 16, 20, 22, 24) et/ou unités de configuration (28a-28e) sont vérifiés en se basant sur les nouveaux paramètres et, le cas échéant, des modifications des paramètres existants sont proposées.

6. Procédé selon l'une des revendications précédentes,
dans lequel le système de configuration électronique comprend au moins une unité d'assistance, et l'unité d'assistance du système de configuration électronique prend en compte, lors de la configuration, des paramètres existants d'au moins une autre unité de configuration (28a-28e) pour vérifier et/ou proposer les nouveaux paramètres,
pour la vérification et/ou la proposition des nouveaux paramètres, différents groupes d'unités de configuration (28a-28e) sont vérifiés par différentes unités d'assistance, les différentes unités d'assistance utilisant différentes quantités de paramètres existants et/ou différents algorithmes pour vérifier et/ou proposer les nouveaux paramètres.

7. Procédé selon l'une des revendications précédentes,
dans lequel s'effectue une visualisation du résultat de la vérification et/ou de la proposition, l'utilisateur étant de préférence invité à confirmer la proposition.

8. Procédé selon l'une des revendications précédentes,
dans lequel le système de configuration recherche des appareils supplémentaires (14, 16, 20, 22, 24) par l'intermédiaire d'un réseau de données, et les paramètres existants des appareils supplémentaires (14, 16, 20, 22, 24) sont pris en compte lors de la vérification et/ou de la proposition des nouveaux paramètres.

9. Procédé selon l'une des revendications précédentes,
dans lequel des unités de configuration (28a-28e) peuvent être identifiées comme ne devant pas être prises en compte lors de la vérification et/ou de la proposition des nouveaux paramètres.

10. Procédé selon l'une des revendications précédentes,
dans lequel les nouveaux paramètres et/ou les paramètres existants comprennent des adresses de réseau, des paramètres relatifs à la synchronisation temporelle, un numéro de réseau de sécurité (Safety-Network-Number) (SNN), des paramètres relatifs à l'enregistrement de données et/ou des paramètres relatifs à la traduction d'adresses de réseau (NAT).

11. Procédé selon l'une des revendications précédentes,
dans lequel les propositions acceptées par l'utilisateur sont mémorisées et d'autres propositions sont acceptées automatiquement si elles correspondent aux propositions acceptées par l'utilisateur.

12. Procédé selon l'une des revendications précédentes,
dans lequel des paramètres existants entrés par l'utilisateur pour d'autres unités de configuration (28a-28e) sont mémorisés et proposés comme nouveaux paramètres.

13. Système de configuration électronique pour configurer un ou plusieurs appareils (14, 16, 20, 22, 24) d'une machine industrielle (10), les appareils (14, 16, 20, 22, 24) étant associés à des unités de configuration (28a-28e), et les unités de configuration (28a-28e) comprenant au moins en partie des paramètres existants,
**caractérisé en ce que**
le système de configuration électronique est conçu pour
- configurer au moins une unité de configuration (28a-28e), de nouveaux paramètres étant définis lors de la configuration, lesquels présentent des effets sur l'ensemble des appareils, de sorte que les nouveaux paramètres ont des effets lors de l'interaction avec d'autres appareils (14, 16, 20, 22, 24) de la machine, et
- prendre en compte, lors de la configuration, des paramètres existants d'au moins une autre parmi les unités de configuration (28a-28e), afin de vérifier et/ou de proposer les nouveaux paramètres,
le système de configuration électronique étant réalisé pour afficher une surface utilisateur graphique dans laquelle un utilisateur peut modifier les nouveaux paramètres proposés ou entrés et vérifiés par l'utilisateur lui-même.

14. Système comprenant un système de configuration électronique selon la revendication 13 et plusieurs appareils (14, 16, 20, 22, 24) d'une machine industrielle (10), le système de configuration électronique étant conçu pour configurer un appareil (14, 16, 20, 22, 24) de la machine industrielle (10) avec de nouveaux paramètres.
